Europäisches Patentamt

European Patent Office

Office européen des brevets

(19)

(11) Publication number: **0 201 346**
A2

# EUROPEAN PATENT APPLICATION

(12)

(21) Application number: 86303542.4

(22) Date of filing: 09.05.86

(51) Int. Cl.⁴: **B 23 K 37/04**

(30) Priority: 09.05.85 GB 8511789

(43) Date of publication of application: 12.11.86
Bulletin 86/46

(84) Designated Contracting States: AT BE CH DE FR GB IT LI NL SE

(71) Applicant: South London Electrical Equipment Company Limited, Lanier Works Hither Green Lane, London SE13 8QD (GB)

(72) Inventor: Slee, Robert Kenneth, Lanier Works, Hither Green Lane London SE13 6QD (GB)

(74) Representative: JENSEN & SON, 8 Fulwood Place High Holborn, London WC1V 6HG (GB)

(54) Seam welding apparatus.

(57) Seam welding apparatus for welding lids onto a base portion of a package for semi-conductor components has a plate 112 on which the package is placed. The base and lid of the package are located laterally by a plurality of resilient arms 122 mounted on the plate. The lid is welded to the base portion by an electrode roller 30 which rolls along the seam to be welded deflecting the resilient arms downwardly out of its path.

## Seam Welding Apparatus

The invention relates to a seam welding apparatus for sealing the lids of component packages, such as component packages of the type used for containing electronic components, to base portions thereof.

It has been found that in many cases the effective lives of electronic components can be increased substantially if they are operated exclusively in oxygen-free atmosphere. For this reason, certain electronic components have been hermetically sealed in minature housings or packages containing oxygen-free gases. In most cases the packages, commonly referred to as "flat-pack" packages preferably have either round, square or rectangular configurations in plan and have either exclusively metallic or partially metallic and partially ceramic constructions. Generally, the most common type of "flat-pack" packages have comprised an open housing-like base portion having a bottom wall and one or more upstanding side walls, and a substantially flat top wall or lid which is welded to the upper edges of the base portion side walls to hermetically seal the interior of the package.

The term "welded" is used in a very general sense because, depending on the precise nature of the package material, the sealing may be by brazing, fusion or similar sealing/securing technique.

In order to assure that the interior of an electronic component package contains an oxygen-free atmosphere, the assembly must be carried out in a controlled, oxygen-free atmosphere. For this reason, assembly and welding operations of this type have normally been carried out in "glove-box" apparatus of the type comprising a housing which is pressurized with a gas, such as nitrogen, and has a viewing window therein, and a pair of gloves which are sealingly received in apertures in a wall of the housing. A seam welding apparatus is contained in the housing for

- 2 -

welding the lids of packages to the base portions thereof, the welding apparatus being operable by an operator by inserting his or her hand and arms into the glove-box gloves and manipulating the apparatus utilizing the gloves so that the oxygen-free atmosphere in the glove box is not disturbed. However, it has been found that it is often difficult to manipulate the lids and base portions of packages to assemble them before they are welded while waring glove-box gloves because of the relatively small dimensions.

It has also proved difficult to hold the lids on the bases in the correct position at the initiation of the welding process since the welding heads often displace the lids when they are brought into contact with the lids.

The present invention seeks to overcome or substantially alleviate these problems.

According to the present invention there is provided seam welding apparatus for securing a package lid to a base portion of a component package, wherein the apparatus comprises locating means for receiving and positioning said package base portion and further locating means for retaining said lid in assembled relation on said package base portion, at least one welding head for welding said pacakge lid to said package base portion, means for causing relative advancement between said head and said package lid along a desired seam line, and means for energizing said welding head to weld said package lid to said package base portion along said seam line, wherein said further locating means comprises a plurality of resilient arm members each adapted to abut a lateral side or edge of the base portion and lid to maintain these two components in the correct relative disposition.

Preferably, said arm members are electrically non-conductive. Arm members may be disposed abutting each of the sides of the package or, when the package is square or rectangular, members may be provided at each of two opposed corners, the abutting part of the members being shaped to prevent movement of the package towards each of the two adjacent sides.

An embodiment of the invention will now be described by way of example, with reference to the drawings in which:

Fig. 1 is a perspective view of apparatus of the invention,

Fig. 2 is an exploded view of an electronic component package,

Fig. 2A is a perspective view of a fully assembled and welded electronic component package,

Fig. 3 is an enlarged sectional view of the welding head and pressure sensing assembly of the welder unit;

Fig. 4 is a similar view thereof wherein the pressure on the welding head is within a preselected welding pressure range so that the pivot arm on which the head is mounted is in a predetermined welding position,

Figs. 5A,5B,6A and 6B show resilient package locating members,

Fig. 7 shows a plan view of a table,

Fig. 8 shows various arrangements for securing the members, and

Fig. 9 shows an arrangement for rapid adjustment of the position of the members.

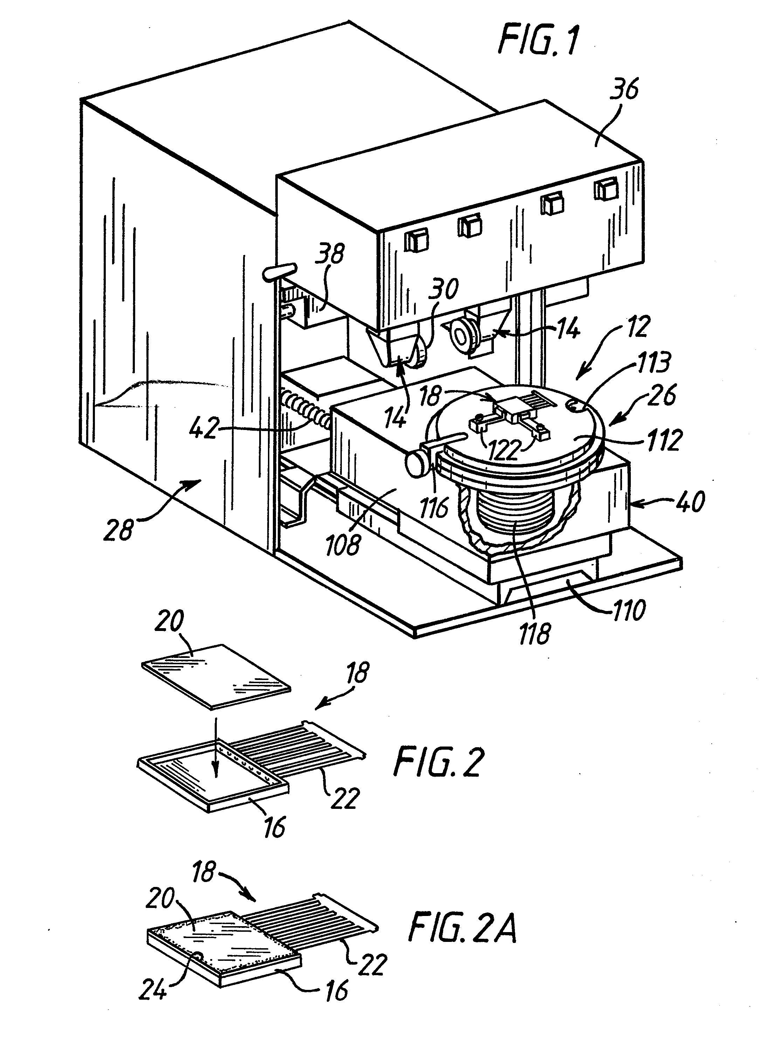

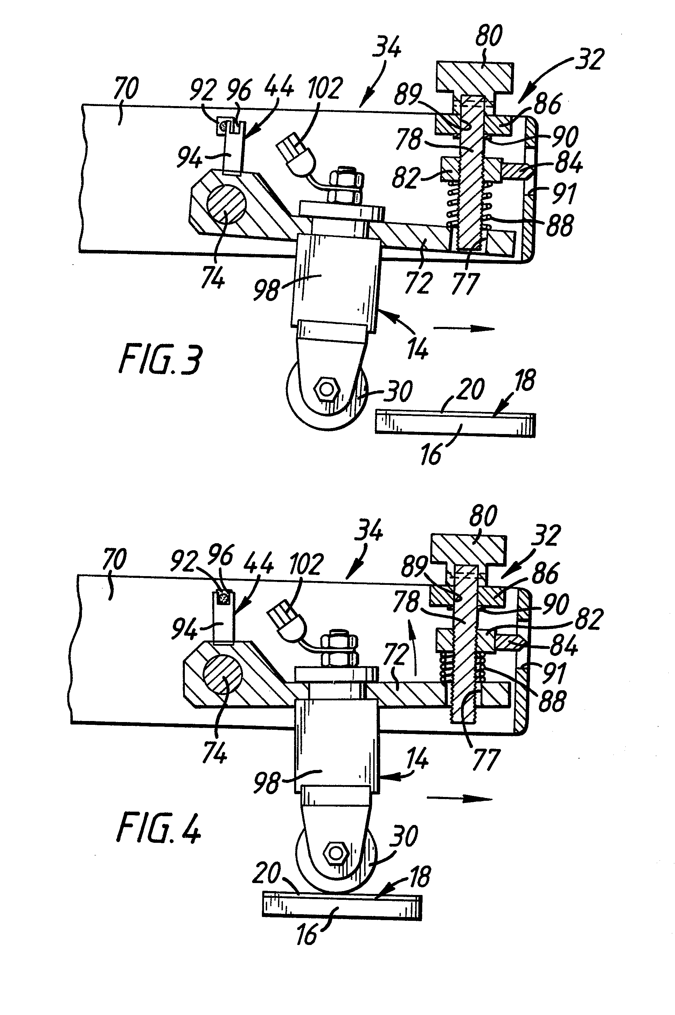

Referring now to the drawings, seam welding apparatus 10 comprises a main welder unit illustrated in Fig. 1 and generally indicated at 12, which includes a conventional welding transformer which is operative for energizing a pair of welding heads 14 of the welder unit 12, and a programmable controller which is operative for controlling the operation of the welding transformer and the welder unit 12. The welding apparatus 10 is operative for welding an electronic component package of the type illustrated in Figs. 3 and 4 and generally indicated at 18, in order to secure a lid 20 of the package 18 to an open box-like base portion 16 thereof a lead frame 22. More specifically, the controller controls the welder unit 12 and the transformer to produce welded seams 24 along the peripheral edge portions of the lid 20 to secure the lid 20 to the upper edges of the side walls of the base portion 16 in order to hermetically seal the interior of the package 18.

Referring to Figs. 1, 3 and 4, the welder unit 12 which comprises an upper housing 36 and a welder assembly generally indicated at 26 is illustrated in Fig. 1. The welder assembly 26 comprises a chassis generally indicated at 28, the pair of welding heads 14 having welding electrode rollers generally indicated at 30, a pair of welding head pressure-adjustment assemblies generally indicated at 32, a welding head laterally positioning mechanism indicated at 38 for adjusting the lateral spacing of the welding heads, an indexer assembly indicated at 40, and an indexer front-to-back position or translation mechanism generally indicated at 42. The welder assembly 26 further comprises a pair of head-pressure sensing assemblies 44 which are mounted on the head mounting assemblies 34, one of the head-pressure sensing assemblies being illustrated in Figs. 3 and 4. The indexer assembly 40 and the indexer front-to-back position or translation mechanism 42 are mounted on the chassis 28.

For operation of the welder unit 12, an unassembled package 18 is positioned on the indexer assembly 40, and the head-pressure adjustment assemblies 32 are adjusted to set desired welding-head pressures for producing the desired welds with the welding heads 14. The lateral spacing of the welding heads 14 is adjusted by operation of the mechanism 38. The indexer translation mechanism 42 is actuated to move the indexer assembly 40 forwardly or rearwardly in the welder unit 12 to position the package 18 beneath the welding heads 14. The welding heads 14 are then lowered so that the heads 14 contact the opposite peripheral edge portions of the lid 20.

When the welding head pressures on the welding heads 14 correspond to the preset welding-head pressure designated on the welding head pressure-adjustment assemblies 32, the welding heads are energised to weld the lid 20 of the package 18 to the base portion 16 thereof, whereas when the welding pressures on the welding heads 14 are not within the predetermined pressure ranges set on the pressure-adjustment assemblies 32, the heads 14 cannot be energised. In this regard, preferably as soon as the welding head pressures are within the desired ranges, the transformer is actuated to instantanously energise the heads 14 to produce spot or tack welds at intermediate points along the opposite side edge portions of the lid 20. The welding heads 14 are then deenergized, and raised. The translation assembly 42 then is operated to reposition the package so that a pair of opposite corner portions thereof are positioned beneath the heads 14. The heads 14 are then lowered and when the pressures on the heads 14 are within the preset ranges as sensed by the pressure-sensing assemblies 44, the heads 14 are again energised by the transformer. As soon as the welding heads 14 have been energized, the package 18 is moved relative to the welding heads 14 so that the heads 14 contact the peripheral edge portion of a pair of opposite edges of the lid 20 to weld the lid 20 to the upper edges of the adjacent side walls of the base portion 16. As soon as one pair of opposite side edges of the lid 20 have been welded to the base portion 16, the welding heads 14 are raised and the indexer assembly 40 is operated to cause a 90-degree rotation of the package 18. The welder unit 12 welds the second pair of opposed side edge portions of the lid 20 to the base portion 16 in a similar manner.

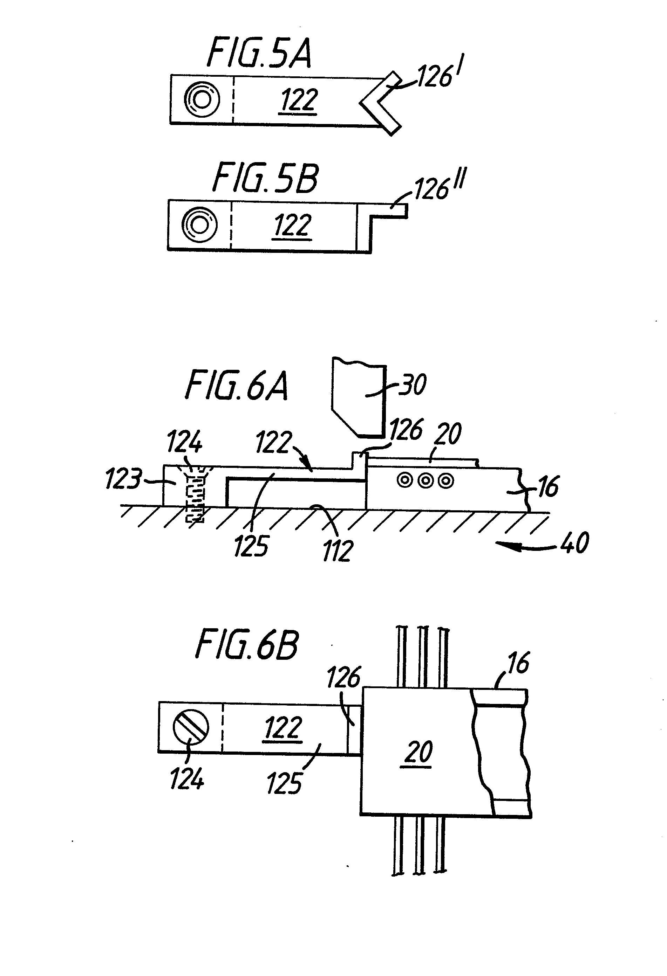

The head-pressure adjustment assemblies 32 are mounted on the head mounting assemblies 34 so that they are contained

within welding head housings 76. Each of the pressure adjustment assemblies 32 comprises a threaded member 78 having a rotatable knob 80, a threaded collar 82 having an indicator member 84 attached thereto, an upper plate 86, and a coil spring 88. The upper plates 86 of the assemblies 32 are mounted on the respective mounting assemblies 34 so that they extend between the respective welding arms 70 thereof and the respective housings 76 thereof, and the threaded members 78 are rotatably received in apertures 89 in the respective plate 86, and retainer rings 90 are secured to the members 78 to retain them in position in the apertures 89 so that the knobs 80 thereof are disposed adjacent the respective plates 86. The members 78 extend downwardly from the respective plates 86, and the terminal portions of the members 78 are received in the apertures 77 in the respective pivot arms 72. The collars 82 are threadedly received on the respective threaded members 78, and the springs 88 are interposed between the respective collars 82 are the respective pivot arms 72. Substantially vertically disposed slots 91 are pivoted in the forwardly facing walls of the housings 76, and the indicator members 84 are positioned so that they travel in the respective adjacent slots 91 and prevent the respective collars 82 from rotating when the respective threaded members 78 are rotated. Accordingly, the head-pressure adjustment assemblies 32 are operative by rotating the knobs 80 for increasing or decreasing the forces generated by the springs 88 which are required to pivot the respective pivot arms 72 upwardly to the welding positions thereof illustrated in Fig. 5, wherein the arms 72 are substantially horizontal.

The head-pressure assemblies 44 are operative for sensing when the pivot arms 72 have been pivoted to the welding positions thereof illustrated in Fig. 4 and for thereby determining when the pressures or upward forces on the respective welding heads 14 correspond to the values set by the welding head adjustment assemblies 32. In this regard, the pressure sensing assemblies 44 each comprise an LED light source 90, a photocell 92, and an alignment member 94 having a slot 96 which extends inwardly from the terminal end thereof. The alignment members 94 are mounted on the respective pivot arms 72 of the head mounting assemblies 34, and they are positioned so that they extend substantially vertically upwardly when the respective arms 72 are substantially horizontal. The photocells 92 and the LEDs 90 of the pressure sensing assemblies 44 are aligned between the respective arms 70 and housings 76 of the mounting assemblies 34, and they are positioned so that when the respective pivot arms 72 are substantially horizontal, they are alignment with the slots 96 in the respective members 94 so that light is received from the LEDs 90 by the respective photocells 92. The photocells 92 are connected to the controller for providing indications that the welding pressure on the respective welding heads 14 are approximately equal or to at least with the set ranges.

The welding heads 14 comprise welding electrode rollers 30 which are preferably constructed of a copper alloy and are rotatably mounted adjacent the lower end of the body portions 98. The welding heads 14 are connectable through terminals to the transformer for energizing the electrode rollers 30.

The indexer assembly 40 comprises for an indexer assembly 106 with an indexer housing 108 which is slidably mounted on a trackway 110 for forward and rearwardly sliding movement in the welder unit 12. The indexer assembly 106 further comprises an upper indexer plate 112 having a notch 113 therein for connecting a terminal of the transformer 14 thereto and a centrally disposed, threaded internal adjustment spool 118 and a vertical adjustment lock 116. The vertical position of the plate 112 is adjustable by loosening the lock 116 and rotating the plate 112 so that it is rotated on the spool 118 and vertically repositioned relative to the housing 108. Also included in the indexer assembly is an indexer stepper motor (not shown) which is connected to the controller, and also to the plate 112 through a conventional internal drive assembly (not shown) for rotating the plate 112 by predetermined amounts.

Figure 1 shows, schematically, two resilient members 122 formed of a non-conductive plastics material which are secured to the plate 112 and are positioned to abut the sides of the base 16 and the edge of the lid 20 to hold these components in the correct relative disposition during a welding operation. In practice, when the members 122 abut the sides as shown in Figure 1, four such members will be provided, one on each side.

Referring now to Figure 6 also, there is shown side and plan views of one member 122. The member 122 has a base 123 by which it is mounted on and secured to the indexer plate 112 through a screw 124. The member has an elongate resilient arm section 125 terminating in an abutting section 126.

In operation, the welding head or wheel 30 is lowered into pressure contact with the lid 20 as described earlier and is rolled along the seam, welding initially a tack intermediate the length of the side and then returning to one end to seam-weld the entire side by means of a plurality of overlapping or closely spaced spot welds. As the welding head 30 passes over the member 122, the member is resiliently deflected downwardly by the wheel. Thus, the members serve to locate the lid laterally at all times.

Figure 5 shows two designs of member 122 designed to be positioned, in pairs, at opposed corners of rectangular packages. The abutting sections 126' and 126'' have faces at right angles designed to abut respective adjacent sides so that the one member constrains movement of the package in two directions.

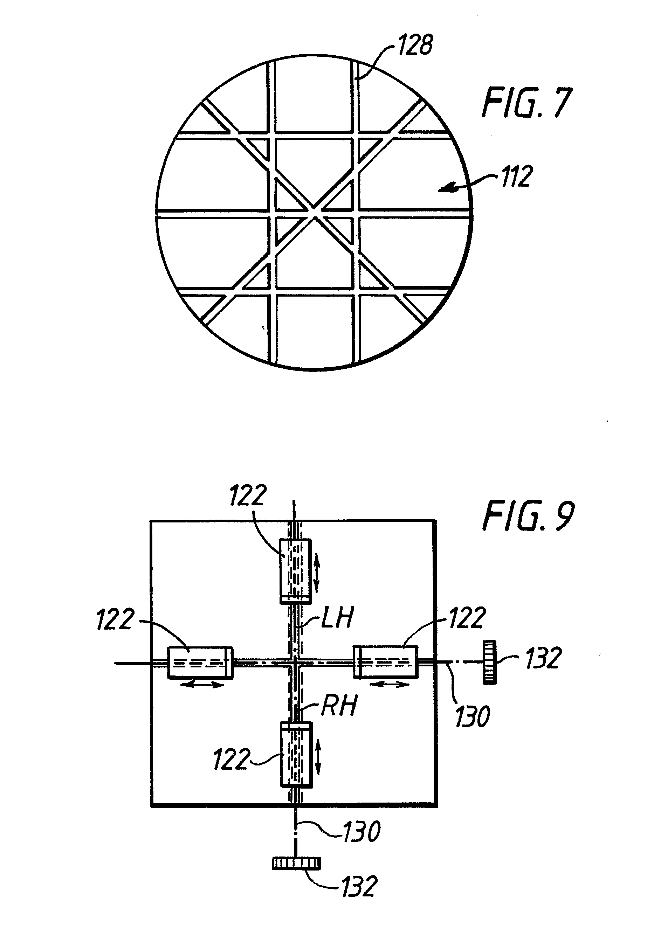

Figure 7 shows a further embodiment in which the plate 112 is provided with a slot matrix comprising a plurality of slots 128. The slots 128 are adapted to receive slidably T-shaped securing elements with which the screws 124 are engageable to enable the members 122 to be secured to the plate 112 in a desired position. In this way, the plate 112 is able to readily accommodate a wide variety of shape and size of package.

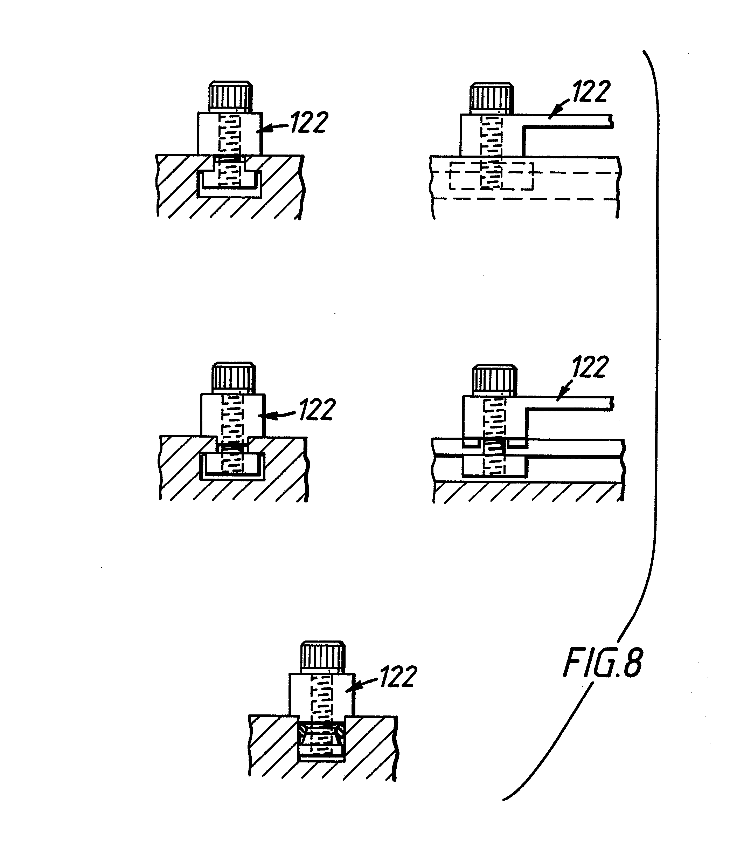

Figure 8 illustrates various types of securing element, some which are T-shaped, others comprising expansible elements which, by tightening the screw, are expanded to grip the sides of the slots. This arrangement has the advantage that the slots are of simpler constructions and hence are cheaper to manufacture.

Figure 9 shows another arrangement in which four members 122 are arranged on two mutually perpendicular axes. The two members on each axis are mounted slidably but non-rotatably in the plate 122 and are threadedly engaged with oppositely handed threads on a shaft 130 rotatable by means of a knob 132. Thus rotation of the shafts 130 causes the members 122 to be moved towards or away from each other, depending on the direction of rotation to a position to suit the particular package being sealed.

The members 122 may be of metal but are preferably of a non-conductive material such as a synthetic plastics material and may be formed by moulding or extruding.

0201346

- 10 -

<u>CLAIMS:</u>

1. Seam welding apparatus for securing a package lid to a base portion of a component package, wherein the apparatus comprises locating means for receiving and positioning said package base portion and further locating means for retaining said lid in assembled relation on said package base portion, at least one welding head for welding said package lid to said package base portion, means for causing relative advancement said head between and said package lid along a desired seam line, and means for energizing said welding head to weld said package lid to said package base portion along said seam line, wherein said further locating means comprises a plurality of resilient arm members each adapted to abut a lateral side or edge of the base portion and lid to maintain these two components in the correct relative disposition.

2. Seam welding apparatus according to claim 1 wherein said relative advancement between said head and said package lid is along a substantially parallel path.

3. Seam welding apparatus according to claim 1 or 2, wherein said arm members are electrically non-conductive.

4. Seam welding apparatus according to claim 1,2 or 3 wherein each of the sides of the package has an associated said arm member abutting thereto.

5. Seam welding apparatus according to claim 1, 2 or 3 wherein each said arm member has two package abutting surfaces disposed at right angles, each member being disposed so that said surfaces abut two adjacent sides of a package.

6. Seam welding apparatus according to any one of claims

- 11 -

1 to 5 wherein said locating means comprises a plate having means therein by which the said arm members are securable by releasable fastening means.

7.     Seam welding apparatus according to claim 6 wherein said means in the plate comprises a plurality of elongate slots to enable the arm members to be secured in a plurality of positions.

8.     Seam welding apparatus according to any one of claims 1 to 6 wherein four arm members are provided, located two on each of two mutually perpendicular axes, the two arm members on each axis being mounted slidably but non-rotatably in the said locating means and are threadedly engaged with oppositely handed threads on a rotatable shaft rotation of said shaft causing relative movement between the two members.

0201346

FIG.1

36

38

30

14

12

113

18

26

14

112

42

116

122

108

28

110

40

118

FIG.2

20

18

16

22

FIG.2A

18

20

24

16

22

FIG.3

FIG.4

*FIG.5A*

*FIG.5B*

*FIG.6A*

*FIG.6B*

FIG. 7

FIG. 9

FIG.8